# EUROPEAN PATENT SPECIFICATION

(11) **EP 3 665 610 B1**
(45) Date of publication and mention of the grant of the patent: **06.10.2021**
(21) Application number: 18766040.2
(22) Date of filing: 02.08.2018
(51) Int. Cl.: G06F 21/75, G06F 21/76, H01L 27/118

(54) **SECURE LOGIC LOCKING AND CONFIGURATION WITH CAMOUFLAGED PROGRAMMABLE MICRO NETLISTS**
SICHERE LOGISCHE VERRIEGELUNG UND KONFIGURATION MIT GETARNTEN PROGRAMMIERBAREN MIKRONETZWERKLISTEN
VERROUILLAGE ET CONFIGURATION DE LOGIQUE SÉCURISÉE COMPORTANT DES MICRO-LISTES D'INTERCONNEXIONS PROGRAMMABLES CAMOUFLÉES

(30) Priority: 07.08.2017 US 201762542049 P
(43) Date of publication of application: 17.06.2020
(73) Proprietor: Rambus Inc., Sunnyvale, CA 94089 (US)
(72) Inventor: CHOW, Lap Wai, South Pasadena, CA 91030 (US); WANG, Bryan J., South Lake Tahoe, CA 96150 (US); BAUKUS, James P., Westlake Village, CA 91361 (US); COCCHI, Ronald P., Seal Beach, CA 90740 (US)
(74) Representative: de Jong, Jean Jacques
(86) International application number: PCT/IB2018/055813
(87) International publication number: WO 2019/030622

(56) References cited:
- WO-A1-2015/038587
- US-A- 6 075 381
- US-B1- 9 479 176

## Description

### BACKGROUND

### 1. Field

The present disclosure relates to application specific integrated circuits (ASICs) and methods of their manufacture, and in particular to such ASICs that resist reverse engineering using camouflage technology.

### 2. Description of the Related Art

Integrated Circuit (IC) designs are vulnerable to intellectual property (IP) theft from reverse engineering, unauthorized cloning and over-production, and device corruption due to Trojan insertion. The risks to the IC industry have been steadily increasing as reverse engineering capabilities increase, and as worldwide IC production capabilities consolidate into a small number of entities. Circuit Camouflage technology is an effective way to defend silicon IP against these risks.

Circuit camouflage technology encompasses the design and use of camouflaged logic gates whose logical function is difficult to determine using conventional reverse engineering techniques. The mask layers used in this style of camouflaged gate have a physical design which mimics that of a conventional logic gate of the primary standard cell library used to design the IC, but the camouflaged gate's actual logic function differs from that of the mimicked logic gates. Hence, the camouflaged logic cells are designed such that their actual logic function is not apparent to a reverse engineer who is delayering and analyzing the silicon device. In fact, the camouflaged cell's layout suggests one logic function, but in reality, its logic function is something altogether different.

A camouflaged circuit contains a number of camouflaged gates among a much higher number of normal gates. A netlist extracted with conventional reverse engineering techniques would include functional discrepancies when compared to the genuine silicon device (without the camouflaged circuits), with the number of discrepancies proportional to the number of camouflaged gates used in the circuit. However, the number and location of the camouflaged gate instances is not apparent to the reverse engineer when looking at the delayered silicon images and/or the extracted netlist, making functional discrepancies very difficult to resolve.

Camouflaged logic cells and traditional logic cells may be organized into small micro-circuits, called Micro Netlists (MNLs), which appear to perform one aggregate function but in fact perform a different function. Such techniques and their products are described, for example, in L. W. Chow, et al., "Camouflaging a standard cell based integrated circuit," US Patent 20100213974, L. W. Chow, et al., "Method and apparatus for camouflaging a standard cell based integrated circuit," US Patent 20100218158, L. W. Chow, et al., "Method and apparatus for camouflaging a standard cell based integrated circuit with micro circuits and post processing," US Patent 20120139582, and L. W. Chow, et al., "Method and apparatus for camouflaging a standard cell based integrated circuit," US Patent 20130191803, which are all referred to.

MNLs are instantiated and connected throughout the design to be protected, and MNL outputs are merged with functional outputs. Because of the camouflaged nature of the cells used in the design, a reverse engineer is likely to extract an incorrect functional netlist due to misinterpretation of camouflaged cells within the MNLs and the larger integrated circuit design. However, MNLs do not allow for secure post-manufacture configuration of their logical function. Hence, they cannot be configured or reconfigured to perform different logical functions, limiting their applicability in multi-use or reconfigurable circuit designs.

What is needed is camouflaged circuit designs that allow for post-manufacture configuration of their logical function and a method for fabricating such designs. This disclosure describes camouflaged circuit designs and methods for fabricating such designs that satisfy this need.

### SUMMARY.

To address the requirements described above, this document discloses a camouflaged ASIC and a method for fabricating same. One embodiment is evidenced by a camouflaged application specific integrated circuit (ASIC), comprising: core logic having a first plurality of interconnected functional logic cells and a programmable micro netlist (PMNL) comprising. The PMNL comprises a second plurality of interconnected functional logic cells that together comprise a logical input and a programming input, the PMNL performing a PMNL function, the programming input communicatively coupleable to a non-volatile memory to receive configuration programming data from the non-volatile memory to configure the PMNL to perform the PMNL function. At least one of the first plurality of functional logic cells and the second plurality of logic cells comprise an uncamouflaged functional logic cell performing a first functional logic cell function and having a first physical layout, and a camouflaged functional logic cell performing a second functional logic cell function that has a second physical layout substantially indistinguishable from the first physical layout. The combined first plurality of interconnected functional logic cells, the PMNL, and the configuration programming data perform one or more ASIC logical functions. In one embodiment, the PMNL further comprises a storage element, communicatively coupled to the program input to accept and store the configuration programming data received by the non-volatile memory.

Another embodiment is evidenced by a method of fabricating an application specific integrated circuit (ASIC), comprising: defining core logic having a first plurality of interconnected functional logic cells that perform one or more ASIC logical functions including a subset of the first plurality of interconnected functional logic cells for performing a programmable micro-netlist (PMNL) function, defining a PMNL for performing the PMNL function, and substituting the PMNL for the subset of the first plurality of interconnected functional logic cells for performing the PMNL function.

The PMNL comprises a second plurality of interconnected functional logic cells that together comprise logical inputs and a programming input to configure the PMNL to perform the PMNL function, the programming input communicatively coupleable to a non-volatile memory to receive configuration programming data from the non-volatile memory to configure the PMNL to perform the PMNL function.

Also, at least one of the first plurality of functional logic cells and the second plurality of logic cells comprise: an uncamouflaged functional logic cell performing a first functional logic cell function and having a first physical layout; and a camouflaged functional logic cell performing a second functional logic cell function and having a second physical layout substantially indistinguishable from the first physical layout. Further, the combined first plurality of interconnected functional logic cells, the PMNL, and the configuration programming data perform one or more ASIC logical functions. In one embodiment, the method further comprises defining a storage element, communicatively coupled to the program input to accept and store the configuration programming data received by the non-volatile memory.

Still another embodiment is evidenced by an application specific integrated circuit (ASIC), produced by performing a process comprising the steps of: defining core logic having a first plurality of interconnected functional logic cells that perform one or more ASIC logical functions including a subset of the first plurality of interconnected functional logic cells for performing a PMNL function; defining a programmable micro netlist (PMNL) for performing the PMNL function, and substituting the PMNL for the subset of the first plurality of interconnected functional logic cells for performing the PMNL function.

The PMNL comprises a second plurality of interconnected functional logic cells that together comprise logical inputs and a programming input to configure the PMNL to perform the PMNL function, the programming input communicatively coupleable to a non-volatile memory to receive configuration programming data from the non-volatile memory to configure the PMNL to perform the PMNL function.

Further, at least one of the first plurality of functional logic cells and the second plurality of logic cells comprise an uncamouflaged functional logic cell performing a first functional logic cell function and having a first physical layout and a camouflaged functional logic cell performing a second functional logic cell function and having a second physical layout substantially indistinguishable from the first physical layout. Also, the combined first plurality of interconnected functional logic cells, the PMNL, and the configuration programming data perform one or more ASIC logical functions.

The features, functions, and advantages that have been discussed can be achieved independently in various embodiments of the present invention or may be combined in yet other embodiments, further details of which can be seen with reference to the following description and drawings.

### BRIEF DESCRIPTION OF THE DRAWINGS

Referring now to the drawings in which like reference numbers represent corresponding parts throughout:
FIG. 1 is a diagram illustrating one embodiment of an ASIC;
FIG. 2 is a diagram illustrating one embodiment of a PMNL core logic implementing an apparent function implemented by a second plurality of interconnected logic cells or gates;
FIG. 3 is a diagram illustrating the actual functionality of the PMNL core illustrated in FIG. 2;
FIG. 4 is a diagram illustrating exemplary operations that can be used to define and produce an ASIC 100 having PMNLs 102
FIG. 5A is a diagram presenting a summary depiction of a portion of the circuit of an ASIC before application of PMNLs;
FIG. 5B presents a summary depiction of the same portion of the circuit of the ASIC after the application of the PMNLs;
FIG. 6 is a diagram depicting the apparent logical cell configuration of the PMNL;
FIG. 7 is a diagram depicting the actual function of the PMNL of FIG. 6;
FIG. 8A is a diagram of a foundry library cell comprising a two-input AND gate and performing an AND function;
FIG. 8B is a diagram of an active camouflaged look-alike cell 804 that performs a different logical function than that of FIG. 8A;
FIG. 9 is a diagram illustrating an exemplary two-input NAND gate active camouflaged cell with passive modification;
FIG. 10 is a diagram of a composite camouflaged AND2 gate comprising a normal AND3 gate communicatively coupled to a passive camouflaged cell with an output tied to high; and
FIG. 11 illustrates an exemplary computer system that could be used to implement processing elements of the above disclosure, including the definition and layout of the normal and camouflaged cells.

### DESCRIPTION

In the following description, reference is made to the accompanying drawings which form a part hereof, and which is shown, by way of illustration, several embodiments. It is understood that other embodiments may be utilized and structural changes may be made without departing from the scope of the present disclosure.

### Overview

The camouflage technique described herein introduces programmed configuration inputs to Micro Netlists, creating Programmable Micro Netlists (PMNLs). PMNLs are a group of camouflaged and non-camouflaged cells that may be configured to perform one of several possible logic functions. They retain all the protective properties of non-programmable MNLs, but also allow for secure post-manufacture configuration of their aggregate logic function. The configuration data resides in the IC's non-volatile memory (NVM) block. PMNLs may be used to implement logic locking, requiring the correct key to configure the circuit for correct operation. They may also be used to securely hide cryptographic key data within the logic area of the IC, or to configure regional options to differentiate logic functions between fabricated devices.

The security of PMNLs is based on the difficulty of reverse engineering camouflaged cell designs, and the contents of the IC's NVM. For a device secured with PMNLs to be successfully cloned, the functions of every camouflaged cell must be successfully identified and the contents of the NVM must be extracted. Selection of a secure, tamper-proof NVM subsystem is a preferred security consideration for this approach, and acceptable secure tamper-proof NVM subsystems are known. However, even if the secure NVM is compromised or a non-secure NVM is used, extraction of a working model from silicon is still not possible unless each camouflaged cell instance is identified and its function is ascertained.

### Programmable Micro Netlist

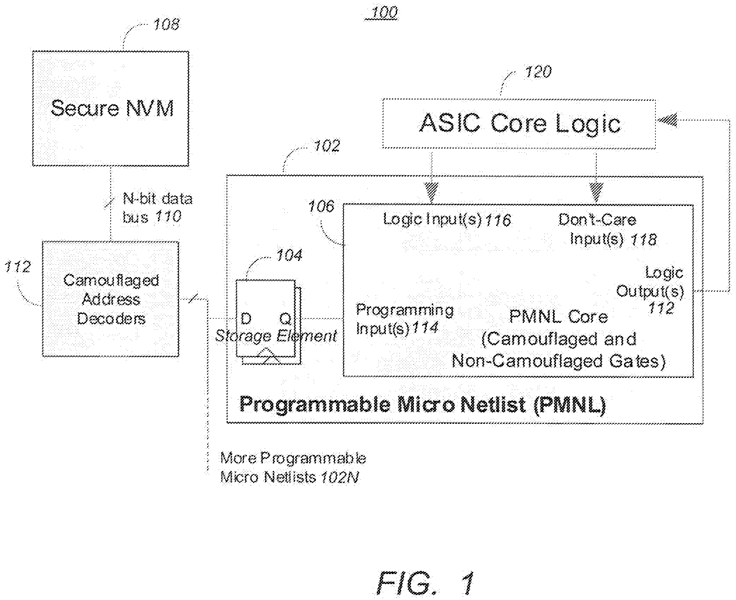

FIG. 1 is a diagram illustrating one embodiment of an ASIC 100. In the illustrated embodiment, the ASIC 100 comprises one or more programmable micro netlists (PMNLs) 102A-102N (hereinafter referred to simply as PMNL(s) 102) communicatively coupled to a non-volatile memory (NVM) 108, a secure NVM in this embodiment, and to ASIC core logic 120.

The one or more PMNLs 102 form an active part of the logical function of the ASIC 100. Preferably, the PMNLs 102 are disposed in physical locations within the PMNL 102 that are scattered throughout the layout of the ASIC 100 and mingled with other components, including camouflaged and uncamouflaged logic gates. Such scattering of the PMNLs 102 may be random or pseudorandom.

Each PMNL 102 comprises a plurality of interconnected functional logic cells that together comprise one or more logical inputs 116, one or more programming inputs 114, and zero or more optional don't care inputs 118. Together, the plurality of interconnected functional logic cells perform one or more PMNL functions. In the illustrated embodiment, each PMNL 102 also includes one local storage element 104 for each bit of configuration data, and a PMNL core 106 having a small number (i.e. 5 - 10) of camouflaged and non-camouflaged functional logic cells that perform an aggregate logic function that is different from their apparent function.

For the purposes of the approach described herein, the NVM 108 can be any on-chip non-volatile memory technology, including rewritable flash memory, or one-time programmable (OTP) memory based on flash or gate oxide breakdown technologies. Secret data will be stored in this memory, so selection of a secure, tamper-proof NVM 108 subsystem is a preferred security consideration for this approach, particularly if one is using a rewritable NVM 108 to store secrets.

The storage elements 104 are communicatively coupled to the secure non-volatile memory 108. The storage elements 104 provide configuration programming data stored therein to at least one of the programming inputs 114 to configure the PMNL core 106 to perform the PMNL function. Typically, the storage elements 104 are initialized at boot time from a communicatively coupled secure NVM 108.

In the illustrated embodiment, the secure NVM 108 is communicatively coupled to each PMNL 102 via an N-bit data bus 110. Before provision to the storage elements 104 of the PMNL 102, the data stored in secure NVM 108 may be optionally processed by one or more communicatively coupled address decoders 112. The address decoders 112 may also be camouflaged, for example, by being constructed using one or more camouflaged functional logic cells. The use of these address decoders 112, particularly when implemented using one or more camouflaged functional logic cells, further increases the security of the ASIC 100 by adding additional uncertainty to a reverse engineer in associating the data stored in the secure NVM 108 with the programming data provided to the PMNLs 102.

Configuration programming data obtained from the secure NVM 108 upon boot-up is stored in the local storage elements 104 upon device initialization. This configuration programming data is applied to the PMNL core 106 to program the PMNL 102. Configuration data cannot be read or written without suitable authorization, and typically does not change during normal function of the ASIC 100.

The ASIC core logic 120 includes a plurality of interconnected logic cells for performing the core logic's functions that form a part of the functions of the ASIC 100. In one embodiment, the ASIC core logic 120 includes one or more camouflaged functional logic cells, as further described below. The PMNL core 106, ASIC core logic 120, and the configuration programming data provided from the storage elements 104 together combine to perform one or more of the functions of the ASIC 100.

The PMNL core 106 of each PMNL 102 includes one or more camouflaged logic cells, which are designed to resist reverse engineering analysis. Accordingly, a reverse engineer is likely to extract an incorrect logical function for each camouflaged cell, and therefore is likely to extract an incorrect function for each PMNL 102, and hence, the ASIC 100.

In embodiments where the ASIC 100 is secured with a plurality of PMNLs 102, each of the plurality of PMNLs 102 may comprise a different and unique PMNL core 106 design. In such embodiments, for a reverse engineer to successfully clone an ASIC 100, the correct logical function for each PMNL 102 must be extracted and all secret programming input bits from storage elements 104 must be correctly applied for such extraction to be successful. As this is unlikely, the use of multiple PMNLs 102, each with a different PMNL core 106 design further increases the security of the ASIC 100.

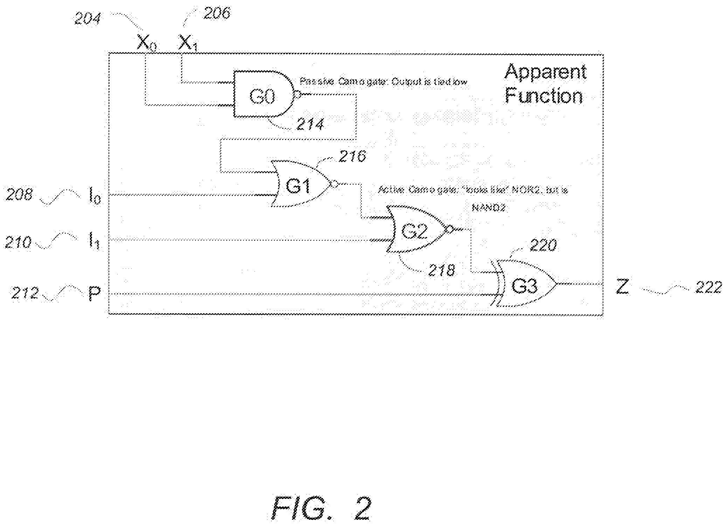

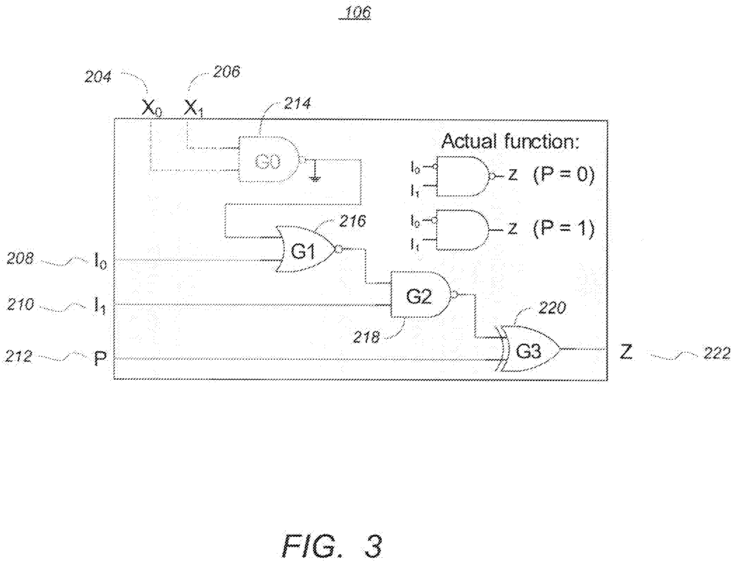

FIGs. 2 and 3 are diagrams illustrating the camouflaging of the plurality of interconnected logic gates used in the PMNL core logic 106. Similar techniques can be used to camouflage the plurality of interconnected logic gates used in the ASIC core logic 120 or address decoder 112 circuitry. Camouflaging is attained by use of one or more uncamouflaged functional logic cells performing a first functional logic cell function and having a first physical layout as well as one or more camouflaged functional logic cells performing a second functional logic cell function but having a second physical layout substantially indistinguishable from the first physical layout.

FIG. 2 is a diagram illustrating one embodiment of a PMNL core 106 logic implementing a function implemented by a plurality of interconnected logic cells or gates 214-220. Like the ASIC core logic 120, the PMNL core 106 includes one or more camouflaged functional logic cells, as further described below.

The actual function implemented is (as shown) that of a logical NAND gate having an inverted input 10 when the programming data P = 0, and a logical AND gate having inverted input 10 when the programming data P = 1.

However, instead of simply implementing this functionality with a simple NAND or AND gate, the functionality is implemented as illustrated, using gates G0-G3 214-220. Gate G0 214 is a NAND gate having inputs X0 204 and X1 206. The output of gate G0 214, while appearing to be communicatively coupled to the input of NOR gate G1 216, is in fact tied to a logical zero using the foregoing camouflage techniques. Thus, the output of gate G0 214 is always logical zero, and this output is provided as an input into NOR gate G1 216. Accordingly, gate G0 214 is a camouflaged functional logic cell. Gate G2 218 is also a camouflaged cell, with the apparent layout of a 2-input NOR gate and an actual function of a 2-input NAND gate. The functional logic cells G1 216 and G3 220 are uncamouflaged functional logic cells. Since one input to NOR gate G1 216 is always a logical zero, the gate G1 216 simply inverts input 10 208.

The output of NOR gate G1 216 is supplied as an input to NAND gate G2 218, and the other input to NAND gate G2 is input I1 210. The output of NAND gate G2 218 is provided as an input to XOR gate G3 220, and the programming input P 212 is provided as the other input to XOR gate G3 220, with the output of XOR gate G3 provided as output Z 222.

FIG. 3 is a diagram illustrating the actual functionality of the PMNL core 106 illustrated in FIG. 2. The apparent functionality, shown in FIG. 2 is likely to be extracted by a reverse engineer because the layouts of the camouflaged cells for gates G0-G3 214-220 and their interconnections suggest this logical function. However, as described earlier in FIG. 2, the actual function of this PMNL core 106 is, a two-input NAND gate (NAND2) with one inverted input when P = 0 and a two-input AND gate (AND2) with one inverted input when P = 1.

The secret configuration programming data used to configure the PMNL 102 is stored in the secure NVM 108 of the ASIC 100, and it may be programmed after manufacture of the ASIC 100 or the device it is used in. Whether using one time programmable (OTP) or rewritable memory, it is preferable, for increased security, to use a secure, tamper-proof programming methodology to store these configuration secrets in the NVM 108. Also, the circuit may be designed to prevent unauthorized reads or writes of the secret configuration programming data.

### Design Methodology

The following section describes design and integration methodologies for using PMNLs in ASIC 100 fabrication processes.

### Logic Design and Integration

In digital circuit design, register-transfer level (RTL) is a design abstraction which models a synchronous digital circuit in terms of the flow of digital signals (data) between hardware registers, and the logical operations performed on those signals. Register-transfer-level abstraction is used in hardware description languages (HDLs) like Verilog and VHDL to create high-level representations of a circuit, from which lower-level representations and ultimately actual wiring can be derived. Design at the RTL level is typical practice in modern digital design.

PMNLs 102A-102N may be integrated within the ASIC 100 either manually or automatically. A manual approach by instantiation in the ASIC's RTL allows for repeatability across synthesis runs and gives designers the most control over how to protect the design. An automatic approach gives designers some control while automating the process of PMNL 102 instantiation and connection. PMNLs 102A-102N are designed to mimic the functions of logic gates that are used in the design. The process of PMNL 102 integration becomes a matter of swapping a logic gate from the original design with an equivalent PMNL 102, and connecting additional don't-care inputs.

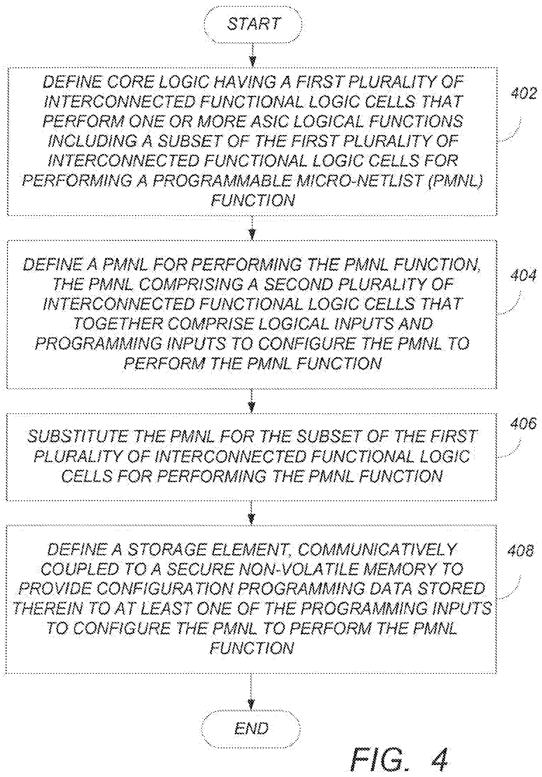

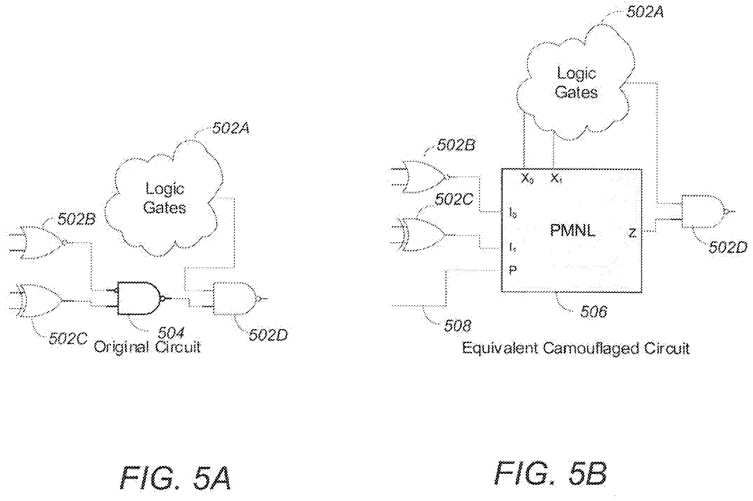

FIG. 4 is a diagram illustrating exemplary operations that can be used to define and produce an ASIC having PMNLs. FIG. 4 will be discussed in connection with FIGs. 5A and 5B, which present the original and camouflaged circuit using the PMNL 102 shown in FIGs. 2 and 3.

FIG. 5A is a diagram presenting a summary depiction of a portion of the circuit of an ASIC 100 before application of PMNLs 102 (the original circuit), while FIG. 5B presents a summary depiction of the same portion of the circuit of the ASIC 100 after the application of the PMNLs 102 (the camouflaged circuit). The circuit of FIG. 5A is functionally equivalent to the circuit of FIG. 5B only if the correct programming input P is provided.

Turning first to FIG. 4, and with reference to FIG. 5A, block 402 defines ASIC core logic having a first plurality of interconnected functional logic cells 502A-502D that perform one or more ASIC logical functions including a subset of the first plurality of interconnected functional logic cells for performing a PMNL function. In the example illustrated in FIG. 5A, the PMNL function is that of a NAND gate 504 with one inverted input.

In block 404, a PMNL 102 is defined. The PMNL 102 performs a PMNL function, and comprises one or more interconnected functional logic cells that together comprise logical inputs and programming inputs to configure the PMNL 102 to perform the PMNL function.

In block 406, the PMNL 102 is substituted for the subset of the first plurality of logic cells for performing the PMNL function. This is illustrated in FIG. 5B with PMNL 506 being substituted for the NAND gate 504 with the inverted input.

In block 408, one or more storage elements are defined. The storage elements are communicatively coupled to a secure NVM to provide configuration programming data stored therein to at least one of the programming inputs to configure the PMNL 506 to perform the PMNL function. For simplicity, the storage elements and NVM are not depicted in FIG. 5B, but are configured analogously to their depiction (e.g. storage elements 104 and NVM 108) shown in FIG. 1. Further, an address decoder such as is connected to the NVM and serves to provide programming inputs for the PMNLs as shown earlier in FIG 1. Loading configuration data into the PMNLs 102 occurs after power-up. The ASIC core logic 120 should be reset following the loading of configuration data into PMNLs.

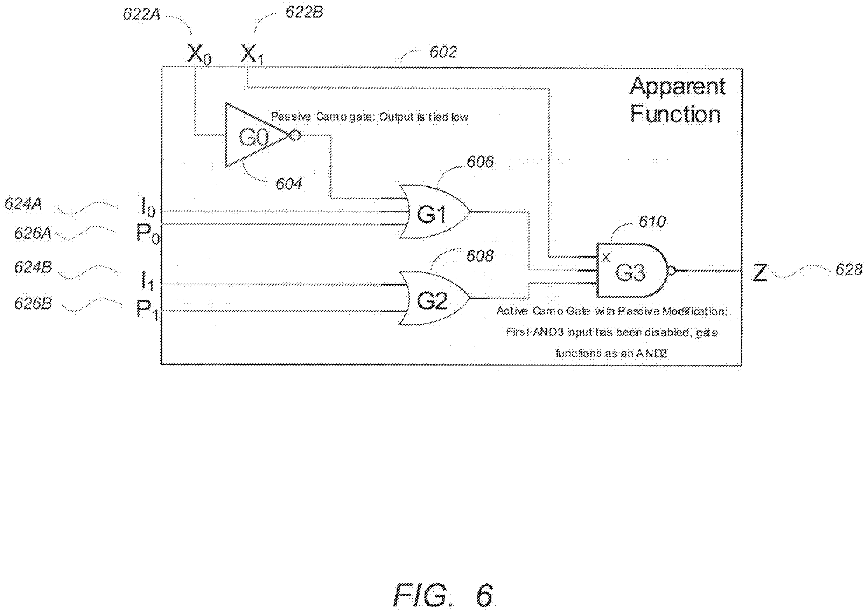

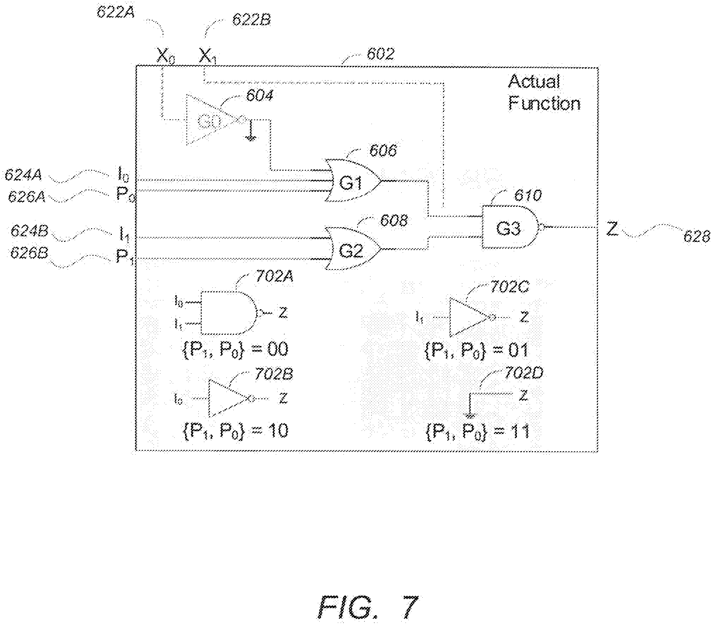

FIGs. 6 and 7 are diagrams illustrating an embodiment wherein the PMNL 602 includes multiple programming inputs.

FIG. 6 is a diagram depicting the apparent logical cell configuration (and hence, function) of the PMNL 602 (e.g. the function that would be likely ascertained by a reverse engineer), while FIG. 7 is a diagram depicting the actual function of the PMNL 602.

The PMNL 602 illustrated in FIG. 6 includes an inverter gate G0 604, OR gate G1 606, OR gate G2 608, and NAND gate G3 610. The input to inverter gate G0 604 is communicatively coupled with input X0 622A, and the output of the inverter gate G0 604 is communicatively coupled with one of three inputs to OR gate G1 606. Another input to OR gate G1 606 is communicatively coupled to first input 10 624A, and the third input to OR gate G1 606 is communicatively coupled with first programming input P0 626A. OR gate G2 608 has two inputs, one communicatively coupled to input I1 624B and the other communicatively coupled to programming input P1 626B. The output of OR gate G1 606 and OR gate G2 is provided to a three input NAND gate G3 610. The first input to NAND gate G3 input X1 622B, while the second and third inputs are provided by OR gate G1 606 and OR gate G2 608. The output of NAND gate G3 610 is provided as output Z 628.

However, in the PMNL 602 illustrated in FIG. 6, the output of inverter gate G0 604 is tied to a logical low, and the input X1 622B has been disabled and is not provided to NAND gate G3. Accordingly, the third input to OR gate G1 606 is always a logical low, and NAND gate G3 610 functions as a two-input NAND gate with its inputs communicatively coupled to OR gate G1 606 and OR gate G2 608. Hence, the actual function of the PMNL 602, when applied to inputs 10 624A, I1 624B, X0 622A and X1 622B differ from the apparent function.

FIG. 7 is a diagram depicting the actual function of the PMNL 602 illustrated in FIG. 6. This actual function also depends on programming inputs P0 626A and P1 626B. Specifically, if {P1,P0} = 00, the PMNL 602 has the function of a two-input NAND gate 702A. Further, if {P1,P0} = 01, the PMNL 602 has the function inverter gate 702C. Similarly, if {P1,P0} = 10, the PMNL 602 also has the function of an inverter gate 702B. Finally, if {P1,P0} = 11, the PMNL 602 has the logical zero (shown by item 702D) regardless of the inputs 10 624A and I1 624B, X0 622A, and X1 622B.

In addition to the multiple programming input embodiment shown in FIGs. 6 and 7, PMNL designs may accept multiple inputs and drive multiple outputs, using the techniques shown above.

### Logic Verification

Logic verification of the camouflaged circuit may be performed with functional tests. Formal equivalence checking tools may be used to verify programmable camouflaged circuits.

### Physical Design and Verification

As with traditional MNLs, the designer should constrain physical design tools to refrain from altering the logic gates and connections within PMNLs. The place tool will decide placement of the PMNL based on circuit connectivity.

### Timing Analysis

Unlike MNLs containing static outputs, PMNLs 102 can be used perform switching logic functions in the ASIC 100. Timing analysis of the PMNL 102 blocks is performed in the same way as other logic on the ASIC 100.

### Testability

If a scannable flip-flop is used as the PMNL storage element 104, the PMNL 102 is fully scan-testable. Note that scan chains introduce numerous security risks to a device, including the ability for an attacker to read out programmed configuration secrets, so scan chains are usually securely disabled before releasing a programmed part into an insecure environment.

A more secure implementation would be to use a non-scannable storage element (latch or flip-flop) for the PMNL storage element 104. This would reduce the test coverage of the PMNL 102, but if this is a concern, additional test vectors may be used to achieve the desired test coverage.

### Camouflaged Cell Types

PMNLs 102 are comprised of "foundry" standard cells and camouflaged cells. The designer may choose what styles of camouflaged cells may be used, based on project schedule and security requirements. Table I summarizes the camouflaged cell types available for use in PMNLs 102.

Inclusion of some camouflage cell types may require a test chip for cell qualification, at the designer's discretion.

| **Camo Cell Type** | **Description** | **Test Chip?** |
|---|---|---|
| Passive | Non-switching cell with static output | No |
| Active | Resembles foundry library cell but performs a different logic function | Yes |
| Active w/Passive Mod | Resembles foundry library cell with one or more inputs disabled | No |
| Composite | A combination of a standard cell and camouflaged cell | No |

### Passive Camouflaged Cells

Passive Camouflaged cells resemble foundry library cells, but their outputs are static (e.g. they do not change with time). Passive Camouflaged cells have outputs that are statically driven to power or ground with camouflaged techniques. These cells have low design risk, and may be used without conducting a formal qualification using a test chip.

### Active Camouflaged Cells

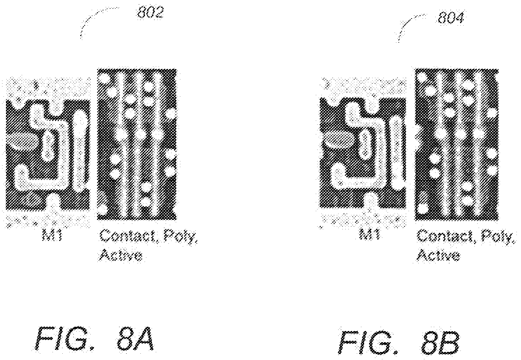

Active Camouflaged cells resemble foundry library cells, but perform different logic functions. FIG. 8A is a diagram of a foundry library cell comprising a two-input AND gate 802 and performing an AND function. FIG. 8B is a diagram of an active camouflaged look-alike cell 804 that performs a different logical function, in this case, a two-input OR function.

Active cells may require a test chip for qualification, at the designer's discretion.

### Active Camouflaged Cells with Passive Modifications

Active Camouflaged Cells with Passive Modifications resemble foundry library cells, but one or more logic inputs have been disabled or inverted with camouflage circuit design techniques. Disabled logic inputs appear to perform a logic function, but in fact they do not affect the cell's primary output. The extraneous disabled inputs are connected to active nodes in the design, which will lead a reverse engineer to extract the wrong function for these camouflaged cells.

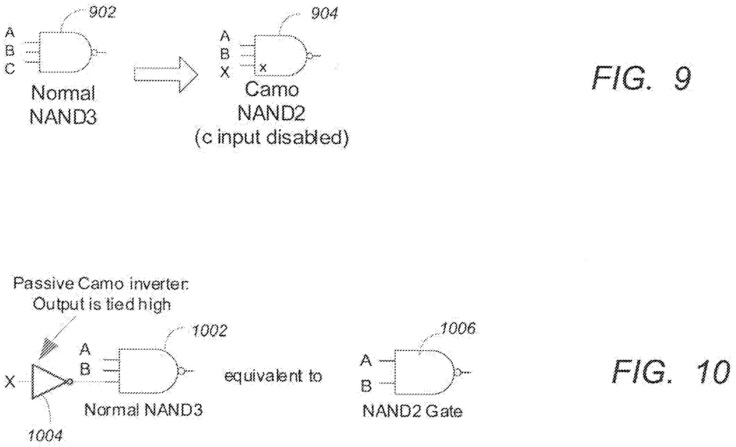

FIG. 9 is a diagram illustrating an example two-input NAND gate (NAND2) active camouflaged cell with passive modification. This example active camouflaged cell with passive modification resembles a normal NAND3 gate 902 (left) but performs a NAND2 function (right) shown for gate 904. The camouflaged gate's C input has been disabled. A reverse engineer would mistakenly interpret this cell as a NAND3 foundry library cell. Active camouflaged cells with passive modifications have low design risk, and may be used without conducting a formal qualification using a test chip.

### Composite Camouflaged Cells

Composite camouflaged cells are typically comprised of two cells, a foundry library logic cell and a camouflaged cell. The Composite Camouflaged cell is typically either a Passive Camouflaged cell or an Active Camouflaged Cell with Passive Modification.

FIG. 10 is a diagram of a composite camouflaged AND2 gate comprising a normal AND3 gate (the foundry library logic cell) 1002 communicatively coupled to a passive camouflaged cell 1004 with an output tied to high to VDD. Since the output of the passive camouflaged cell 1004 is tied to a logical high, the normal AND3 gate and camouflaged cell operate like an AND 2 gate 1006.

Composite Camouflaged cells have low design risk, and may be used without conducting a formal qualification using a test chip.

### Conclusion

This concludes the description of the preferred methods and apparatus of this invention. In summary, the present invention describes a method for obfuscating and configuring a circuit using camouflaged logic gates and secret configuration data stored in non-volatile memory.

### Hardware Environment

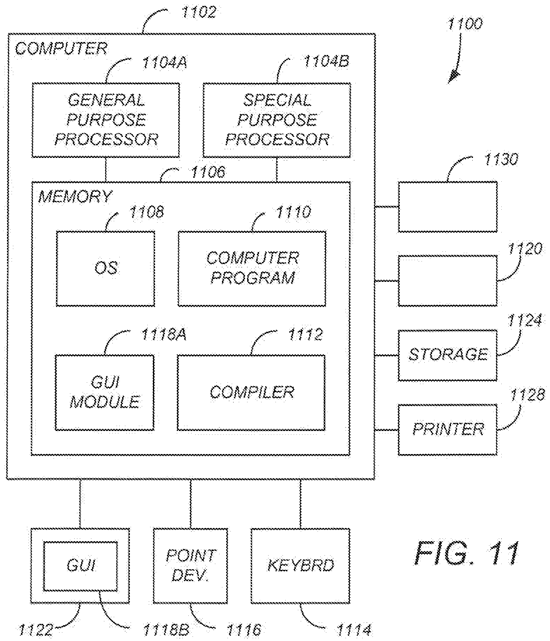

FIG. 11 illustrates an exemplary computer system 1100 that could be used to implement processing elements of the above disclosure, including the definition and layout of the normal and camouflaged cells. The computer 1102 comprises at least one of a general purpose processor 1104A and a special purpose processor 1104B (hereinafter referred to as processor(s) 1104) and a memory, such as random access memory (RAM) 1106. The computer 1102 is operatively coupled to a display 1122, which presents images such as windows to the user on a graphical user interface 1118B. The computer 1102 may be coupled to other devices, such as a keyboard 1114, a mouse device 1116, a printer 1128, etc. Of course, those skilled in the art will recognize that any combination of the above components, or any number of different components, peripherals, and other devices, may be used with the computer 1102.

Generally, the computer 1102 operates under control of an operating system 1108 stored in the memory 1106, and interfaces with the user to accept inputs and commands and to present results through a graphical user interface (GUI) module 1118A. Although the GUI module 1118B is depicted as a separate module, the instructions performing the GUI functions can be resident or distributed in the operating system 1108, the computer program 1110, or implemented with special purpose memory and processors. The computer 1102 also implements a compiler 1112 which allows an application program 1110 written in a programming language such as COBOL, C++, FORTRAN, or other language to be translated into processor 1104 readable code. After completion, the application 1110 accesses and manipulates data stored in the memory 1106 of the computer 1102 using the relationships and logic that was generated using the compiler 1112. The computer 1102 also optionally comprises an external communication device such as a modem, satellite link, Ethernet card, or other device for communicating with other computers.

In one embodiment, instructions implementing the operating system 1108, the computer program 1110, and the compiler 1112 are tangibly embodied in a computer-readable medium, e.g., data storage device 1120, which could include one or more fixed or removable data storage devices, such as a zip drive, floppy disc drive 1124, hard drive, CD-ROM drive, tape drive, etc. Further, the operating system 1108 and the computer program 1110 are comprised of instructions which, when read and executed by the computer 1102, causes the computer 1102 to perform the operations herein described. Computer program 1110 and/or operating instructions may also be tangibly embodied in memory 1106 and/or data communications devices 1130, thereby making a computer program product or article of manufacture. As such, the terms "article of manufacture," "program storage device" and "computer program product" as used herein are intended to encompass a computer program accessible from any computer readable device or media.

Those skilled in the art will recognize many modifications may be made to this configuration without departing from the scope of the present disclosure. For example, those skilled in the art will recognize that any combination of the above components, or any number of different components, peripherals, and other devices, may be used.

### Conclusion

This concludes the description of the preferred methods and apparatus of this invention. In summary, the present invention describes a method for obfuscating and configuring a circuit using camouflaged logic gates and secret configuration data stored in non-volatile memory.

## Claims

1. A camouflaged application specific integrated circuit (ASIC), comprising:
core logic having a first plurality of interconnected functional logic cells;
a programmable micro netlist (PMNL) comprising:
a second plurality of interconnected functional logic cells that together comprise a logical input and a programming input, the PMNL performing a PMNL function, the programming input communicatively coupleable to a non-volatile memory to receive configuration programming data from the non-volatile memory to configure the PMNL to perform the PMNL function;
wherein at least one of the first plurality of functional logic cells and the second plurality of functional logic cells comprise:
an uncamouflaged functional logic cell performing a first functional logic cell function and having a first physical layout; and
a camouflaged functional logic cell performing a second functional logic cell function and having a second physical layout substantially indistinguishable from the first physical layout;
wherein the combined first plurality of interconnected functional logic cells, the PMNL, and the configuration programming data perform one or more ASIC logical functions.

2. The ASIC of claim 1, wherein the PMNL further comprises a storage element, communicatively coupled to the program input to accept and store the configuration programming data received by the non-volatile memory.

3. The ASIC of claim 2, wherein the storage element is initialized at boot time from the non-volatile memory.

4. The ASIC of claim 1, wherein the second plurality of interconnected functional logic cells further comprise don't care inputs.

5. The ASIC of claim 1, wherein the configuration programming data is secret and cannot be read or written without authorization.

6. The ASIC of claim 2, further comprising an address decoder, communicatively coupled between the non-volatile memory and the storage element.

7. The ASIC of claim 1, wherein at least a portion of the configuration programming data comprises programming data for programming the second functional logic cell function.

8. The ASIC of claim 1, wherein the second physical layout is modified from the first physical layout to eliminate a cell structure.

9. The ASIC of claim 1, wherein the second physical layout is modified from the first physical layout to add a cell structure.

10. The ASIC of claim 1, wherein an output of the camouflaged functional logic cell is shorted to a voltage of the ASIC.

11. The ASIC of claim 1, wherein a routing of the camouflaged functional logic cell comprises:
an input of the camouflaged functional logic cell is connected to at least one of other of the interconnected functional logic cells wherein a signal trace of the other of the interconnected logic cells is disposed over the input of the camouflaged functional logic cell; and
an output of the camouflaged functional logic cell is connected to an unconnected input of a nearby second camouflaged logic cell.

12. A method of fabricating an application specific integrated circuit (ASIC), comprising:
defining core logic having a first plurality of interconnected functional logic cells that perform one or more ASIC logical functions including a subset of the first plurality of interconnected functional logic cells for performing a programmable micro-netlist (PMNL) function;
defining a PMNL for performing the PMNL function, the PMNL comprising:
a second plurality of interconnected functional logic cells that together comprise logical inputs and a programming input to configure the PMNL to perform the PMNL function, the programming input communicatively coupleable to a non-volatile memory to receive configuration programming data from the non-volatile memory to configure the PMNL to perform the PMNL function;
substituting the PMNL for the subset of the first plurality of interconnected functional logic cells for performing the PMNL function;
wherein at least one of the first plurality of functional logic cells and the second plurality of logic cells comprise:
an uncamouflaged functional logic cell performing a first functional logic cell function and having a first physical layout; and
a camouflaged functional logic cell performing a second functional logic cell function and having a second physical layout substantially indistinguishable from the first physical layout; and
wherein the combined first plurality of interconnected functional logic cells, the PMNL, and the configuration programming data perform one or more ASIC logical functions.

13. The method of claim 12, further comprising:
defining a storage element, communicatively coupled to the program input to accept and store the configuration programming data received by the non-volatile memory.

14. The method of claim 13, wherein the storage element is initialized at boot time from the non-volatile memory.

15. An application specific integrated circuit (ASIC), produced by performing a process comprising the steps of:
defining core logic having a first plurality of interconnected functional logic cells that perform one or more ASIC logical functions including a subset of the first plurality of interconnected functional logic cells for performing a PMNL function;
defining a programmable micro netlist (PMNL) for performing the PMNL function, the PMNL comprising:
a second plurality of interconnected functional logic cells that together comprise logical inputs and a programming input to configure the PMNL to perform the PMNL function, the programming input communicatively coupleable to a non-volatile memory to receive configuration programming data from the non-volatile memory to configure the PMNL to perform the PMNL function; and
substituting the PMNL for the subset of the first plurality of interconnected functional logic cells for performing the PMNL function;
wherein at least one of the first plurality of functional logic cells and the second plurality of logic cells comprise:
an uncamouflaged functional logic cell performing a first functional logic cell function and having a first physical layout; and
a camouflaged functional logic cell performing a second functional logic cell function and having a second physical layout substantially indistinguishable from the first physical layout; and
wherein the combined first plurality of interconnected functional logic cells, the PMNL, and the configuration programming data perform one or more ASIC logical functions.

## Patentansprüche

1. Getarnte anwendungsspezifische integrierte Schaltung (application specific integrated circuit - ASIC), die Folgendes umfasst:
eine Kernlogik, die erste mehrere miteinander verbundene funktionale Logikzellen aufweist;
eine programmierbare Mikronetzliste (PMNL), die Folgendes umfasst:
zweite mehrere miteinander verbundene funktionale Logikzellen, die zusammen einen logischen Eingang und einen Programmiereingang umfassen, wobei die PMNL eine PMNL-Funktion ausführt, wobei der Programmiereingang mit einem nichtflüchtigen Speicher kommunikativ koppelbar ist, um Konfigurationsprogrammierdaten von dem nichtflüchtigen Speicher zu empfangen, um die PMNL zu konfigurieren, um die PMNL-Funktion auszuführen;
wobei die ersten mehreren funktionalen Logikzellen und/oder die zweiten mehreren funktionalen Logikzellen Folgendes umfassen:
eine ungetarnte funktionale Logikzelle, die eine erste funktionale Logikzellenfunktion ausführt und ein erstes physikalisches Layout aufweist; und
eine getarnte funktionale Logikzelle, die eine zweite funktionale Logikzellenfunktion ausführt und ein zweites physikalisches Layout aufweist, das im Wesentlichen nicht von dem ersten physikalischen Layout zu unterscheiden ist;
wobei die kombinierten ersten mehreren miteinander verbundenen funktionalen Logikzellen, die PMNL und die Konfigurationsprogrammierdaten eine oder mehrere ASIC-Logikfunktionen ausführen.

2. ASIC nach Anspruch 1, wobei die PMNL ferner ein Speicherelement umfasst, das mit dem Programmeingang kommunikativ gekoppelt ist, um die durch den nichtflüchtigen Speicher empfangenen Konfigurationsprogrammierdaten anzunehmen und zu speichern.

3. ASIC nach Anspruch 2, wobei das Speicherelement beim Booten aus dem nichtflüchtigen Speicher initialisiert wird.

4. ASIC nach Anspruch 1, wobei die zweiten mehreren miteinander verbundenen funktionalen Logikzellen ferner Don't Care-Eingänge umfassen.

5. ASIC nach Anspruch 1, wobei die Konfigurationsprogrammierdaten geheim sind und nicht ohne Autorisierung gelesen oder geschrieben werden können.

6. ASIC nach Anspruch 2, die ferner einen Adressendecoder umfasst, der zwischen dem nichtflüchtigen Speicher und dem Speicherelement kommunikativ gekoppelt ist.

7. ASIC nach Anspruch 1, wobei wenigstens ein Teil der Konfigurationsprogrammierdaten Programmierdaten zum Programmieren der zweiten funktionalen Logikzellenfunktion umfasst.

8. ASIC nach Anspruch 1, wobei das zweite physikalische Layout gegenüber dem ersten physikalischen Layout modifiziert ist, um eine Zellstruktur zu beseitigen.

9. ASIC nach Anspruch 1, wobei das zweite physikalische Layout gegenüber dem ersten physikalischen Layout modifiziert ist, um eine Zellstruktur hinzuzufügen.

10. ASIC nach Anspruch 1, wobei ein Ausgang der getarnten funktionalen Logikzelle mit einer Spannung der ASIC kurzgeschlossen ist.

11. ASIC nach Anspruch 1, wobei ein Routing der getarnten funktionalen Logikzelle Folgendes umfasst:
einen Eingang der getarnten funktionalen Logikzelle, der mit wenigstens einer der anderen miteinander verbundenen funktionalen Logikzellen verbunden ist, wobei eine Signalspur der anderen der miteinander verbundenen Logikzellen über dem Eingang der getarnten funktionalen Logikzelle angeordnet ist; und
einen Ausgang der getarnten funktionalen Logikzelle, der mit einem unverbundenen Eingang einer nahe gelegenen zweiten getarnten Logikzelle verbunden ist.

12. Verfahren zum Herstellen einer anwendungsspezifischen integrierten Schaltung (ASIC), das Folgendes umfasst:
Definieren einer Kernlogik, die erste mehrere miteinander verbundene funktionale Logikzellen aufweist, die eine oder mehrere ASIC-Logikfunktionen ausführen, einschließlich einer Teilmenge der ersten mehreren miteinander verbundenen funktionalen Logikzellen zum Ausführen einer programmierbaren Mikronetzlisten(PMNL)-Funktion;
Definieren einer PMNL zum Ausführen der PMNL-Funktion, wobei die PMNL Folgendes umfasst:
zweite mehrere miteinander verbundene funktionale Logikzellen, die zusammen logische Eingänge und einen Programmiereingang umfassen, um die PMNL zu konfigurieren, um die PMNL-Funktion auszuführen, wobei der Programmiereingang mit einem nichtflüchtigen Speicher kommunikativ koppelbar ist, um Konfigurationsprogrammierdaten von dem nichtflüchtigen Speicher zu empfangen, um die PMNL zu konfigurieren, um die PMNL-Funktion auszuführen;
Ersetzen der PMNL durch die Teilmenge der ersten mehreren miteinander verbundenen funktionalen Logikzellen zum Ausführen der PMNL-Funktion;
wobei die ersten mehreren funktionalen Logikzellen und/oder die zweiten mehreren Logikzellen Folgendes umfassen:
eine ungetarnte funktionale Logikzelle, die eine erste funktionale Logikzellenfunktion ausführt und ein erstes physikalisches Layout aufweist; und
eine getarnte funktionale Logikzelle, die eine zweite funktionale Logikzellenfunktion ausführt und ein zweites physikalisches Layout aufweist, das im Wesentlichen nicht von dem ersten physikalischen Layout zu unterscheiden ist; und wobei die kombinierten ersten mehreren miteinander verbundenen funktionalen Logikzellen, die PMNL und die Konfigurationsprogrammierdaten eine oder mehrere ASIC-Logikfunktionen ausführen.

13. Verfahren nach Anspruch 12, das ferner Folgendes umfasst:
Definieren eines Speicherelements, das mit dem Programmeingang kommunikativ gekoppelt ist, um die durch den nichtflüchtigen Speicher empfangenen Konfigurationsprogrammierdaten anzunehmen und zu speichern.

14. Verfahren nach Anspruch 13, wobei das Speicherelement beim Booten aus dem nichtflüchtigen Speicher initialisiert wird.

15. Anwendungsspezifische integrierte Schaltung (ASIC), die durch Ausführen eines Prozesses erzeugt wird, der die folgenden Schritte umfasst:
Definieren einer Kernlogik, die erste mehrere miteinander verbundene funktionale Logikzellen aufweist, die eine oder mehrere ASIC-Logikfunktionen ausführen, einschließlich einer Teilmenge der ersten mehreren miteinander verbundenen funktionalen Logikzellen zum Ausführen einer PMNL-Funktion;
Definieren einer programmierbaren Mikronetzliste (PMNL) zum Ausführen der PMNL-Funktion, wobei die PMNL Folgendes umfasst:
zweite mehrere miteinander verbundene funktionale Logikzellen, die zusammen logische Eingänge und einen Programmiereingang umfassen, um die PMNL zu konfigurieren, um die PMNL-Funktion auszuführen, wobei der Programmiereingang mit einem nichtflüchtigen Speicher kommunikativ koppelbar ist, um Konfigurationsprogrammierdaten von dem nichtflüchtigen Speicher zu empfangen, um die PMNL zu konfigurieren, um die PMNL-Funktion auszuführen; und
Ersetzen der PMNL durch die Teilmenge der ersten mehreren miteinander verbundenen funktionalen Logikzellen zum Ausführen der PMNL-Funktion;
wobei die ersten mehreren funktionalen Logikzellen und/oder die zweiten mehreren Logikzellen Folgendes umfassen:
eine ungetarnte funktionale Logikzelle, die eine erste funktionale Logikzellenfunktion ausführt und ein erstes physikalisches Layout aufweist; und
eine getarnte funktionale Logikzelle, die eine zweite funktionale Logikzellenfunktion ausführt und ein zweites physikalisches Layout aufweist, das im Wesentlichen nicht von dem ersten physikalischen Layout zu unterscheiden ist; und
wobei die kombinierten ersten mehreren miteinander verbundenen funktionalen Logikzellen, die PMNL und die Konfigurationsprogrammierdaten eine oder mehrere ASIC-Logikfunktionen ausführen.

## Revendications

1. Circuit intégré à application spécifique (ASIC) camouflé, comprenant :
une logique centrale ayant une première pluralité de cellules logiques fonctionnelles interconnectées ;
une micro-liste d'interconnexion programmable (PMNL) comprenant :
une seconde pluralité de cellules logiques fonctionnelles interconnectées qui comprennent ensemble une entrée logique et une entrée de programmation, la PMNL exécutant une fonction PMNL, l'entrée de programmation pouvant être couplée en communication à une mémoire non volatile pour recevoir des données de programmation de configuration à partir de la mémoire non volatile pour configurer la PMNL afin d'exécuter la fonction PMNL ;
dans lequel au moins l'une de la première pluralité de cellules logiques fonctionnelles et de la seconde pluralité de cellules logiques fonctionnelles comprend :
une cellule logique fonctionnelle non camouflée exécutant une première fonction de cellule logique fonctionnelle et ayant une première présentation physique ; et
une cellule logique fonctionnelle camouflée exécutant une seconde fonction de cellule logique fonctionnelle et ayant une seconde présentation physique sensiblement impossible à distinguer de la première présentation physique ;
dans lequel la première pluralité combinée de cellules logiques fonctionnelles interconnectées, la PMNL et les données de programmation de configuration exécutent une ou plusieurs fonctions logiques ASIC.

2. ASIC selon la revendication 1, dans lequel la PMNL comprend en outre un élément de stockage, couplé en communication à l'entrée de programme pour accepter et stocker les données de programmation de configuration reçues par la mémoire non volatile.

3. ASIC selon la revendication 2, dans lequel l'élément de stockage est initialisé au moment du démarrage à partir de la mémoire non volatile.

4. ASIC selon la revendication 1, dans lequel la seconde pluralité de cellules logiques fonctionnelles interconnectées comprend en outre des entrées indifférentes.

5. ASIC selon la revendication 1, dans lequel les données de programmation de configuration sont secrètes et ne peuvent pas être lues ou écrites sans autorisation.

6. ASIC selon la revendication 2, comprenant en outre un décodeur d'adresse, couplé en communication entre la mémoire non volatile et l'élément de stockage.

7. ASIC selon la revendication 1, dans lequel au moins une partie des données de programmation de configuration comprend des données de programmation pour programmer la seconde fonction de cellule logique fonctionnelle.

8. ASIC selon la revendication 1, dans lequel la seconde présentation physique est modifiée à partir de la première présentation physique pour éliminer une structure de cellule.

9. ASIC selon la revendication 1, dans lequel la seconde présentation physique est modifiée à partir de la première présentation physique pour ajouter une structure de cellule.

10. ASIC selon la revendication 1, dans lequel une sortie de la cellule logique fonctionnelle camouflée est court-circuitée selon une tension de l'ASIC.

11. ASIC selon la revendication 1, dans lequel un routage de la cellule logique fonctionnelle camouflée comprend :
une entrée de la cellule logique fonctionnelle camouflée est connectée à au moins l'une des autres des cellules logiques fonctionnelles interconnectées dans lequel une trace de signal de l'autre des cellules logiques interconnectées est disposée sur l'entrée de la cellule logique fonctionnelle camouflée ; et
une sortie de la cellule logique fonctionnelle camouflée est connectée à une entrée non connectée d'une seconde cellule logique camouflée voisine.

12. Procédé de fabrication d'un circuit intégré à application spécifique (ASIC), comprenant :
la définition d'une logique centrale comme ayant une première pluralité de cellules logiques fonctionnelles interconnectées qui exécutent une ou plusieurs fonctions logiques ASIC y compris un sous-ensemble de la première pluralité de cellules logiques fonctionnelles interconnectées pour exécuter une fonction de micro-liste d'interconnexion programmable (PMNL) ;
la définition d'une PMNL pour exécuter la fonction PMNL, la PMNL comprenant :
une seconde pluralité de cellules logiques fonctionnelles interconnectées qui comprennent ensemble des entrées logiques et une entrée de programmation pour configurer le PAINT pour exécuter la fonction PAINT, l'entrée de programmation pouvant être couplée en communication à une mémoire non volatile pour recevoir des données de programmation de configuration à partir de la mémoire non volatile pour configurer le PAINT pour exécuter la fonction PAINT ;
le remplacement de la PMNL par le sous-ensemble de la première pluralité de cellules logiques fonctionnelles interconnectées pour exécuter la fonction PMNL ;
dans lequel au moins l'une de la première pluralité de cellules logiques fonctionnelles et de la seconde pluralité de cellules logiques comprend :
une cellule logique fonctionnelle non camouflée exécutant une première fonction de cellule logique fonctionnelle et ayant une première présentation physique ; et
une cellule logique fonctionnelle camouflée exécutant une seconde fonction de cellule logique fonctionnelle et ayant une seconde présentation physique sensiblement impossible à distinguer de la première présentation physique ; et dans lequel la première pluralité combinée de cellules logiques fonctionnelles interconnectées, la PMNL et les données de programmation de configuration exécutent une ou plusieurs fonctions logiques ASIC.

13. Procédé selon la revendication 12, comprenant en outre :
la définition d'un élément de stockage, couplé en communication à l'entrée de programme pour accepter et stocker les données de programmation de configuration reçues par la mémoire non volatile.

14. Procédé selon la revendication 13, dans lequel l'élément de stockage est initialisé au moment du démarrage à partir de la mémoire non volatile.

15. Circuit intégré à application spécifique (ASIC), produit en exécutant un processus comprenant les étapes de :
définition d'une logique centrale comme ayant une première pluralité de cellules logiques fonctionnelles interconnectées qui exécutent une ou plusieurs fonctions logiques ASIC y compris un sous-ensemble de la première pluralité de cellules logiques fonctionnelles interconnectées pour exécuter une fonction PMNL ;
définition d'une micro-liste d'interconnexion programmable (PMNL) pour exécuter la fonction PMNL, la PMNL comprenant :
une seconde pluralité de cellules logiques fonctionnelles interconnectées qui comprennent ensemble des entrées logiques et une entrée de programmation pour configurer la PMNL afin d'exécuter la fonction PMNL, l'entrée de programmation pouvant être couplée en communication à une mémoire non volatile pour recevoir des données de programmation de configuration à partir de la mémoire non volatile pour configurer la PMNL afin d'exécuter la fonction PMNL ; et
remplacement de la PMNL par le sous-ensemble de la première pluralité de cellules logiques fonctionnelles interconnectées pour exécuter la fonction PMNL ;
dans lequel au moins l'une de la première pluralité de cellules logiques fonctionnelles et de la seconde pluralité de cellules logiques comprend :
une cellule logique fonctionnelle non camouflée exécutant une première fonction de cellule logique fonctionnelle et ayant une première présentation physique ; et
une cellule logique fonctionnelle camouflée exécutant une seconde fonction de cellule logique fonctionnelle et ayant une seconde présentation physique sensiblement impossible à distinguer de la première présentation physique ; et
dans lequel la première pluralité combinée de cellules logiques fonctionnelles interconnectées, la PMNL et les données de programmation de configuration exécutent une ou plusieurs fonctions logiques ASIC.
